# EUROPEAN PATENT APPLICATION

(11) **EP 1 499 065 A2**
(43) Date of publication of application: **19.01.2005**
(21) Application number: 04254297.7
(22) Date of filing: 16.07.2004
(51) Int. Cl.: H04L 12/24

(54) **Network planning method**

(30) Priority: 16.07.2003 GB 0316677
(71) Applicant: Capacitas Limited, London EC1R 3BW (GB)
(72) Inventor: Mohammed, Manzoor Dr., Romford, Essex RM1 4SU (GB); Bolton, Andrew, Chesham, Buckinghamshire HP5 2PY (GB); Quilton, Daniel, London N16 8BT (GB)
(74) Representative: Spaargaren, Jerome

(57) **Abstract**

A method of conducting network planning using a computer-software implemented planning tool, said method comprising:
modeling a first network layer in software as a first network layer model;
modeling a second network layer in software as a second network layer model; and
simulating a network capacity requirement by exchanging data between said first and second network layer models.

## Description

### Field of the invention

This invention relates to network planning for telecommunications networks.

### Background of the invention

Large telecommunications networks change because of new technologies, introduction of new services and the general increase in volumes of telephone and computer traffic. Network operators employ people to plan for the changes in the networks. This activity is often referred to as 'capacity planning' or 'network planning'.

Large voice and computer networks are built using multiple network technologies where each technology performs a specific set of tasks. The networks are designed in a layered fashion where each technology may interact with a technology at the layer above, or at the layer below, hence the term 'multi-layer network'. The amalgamation of multiple technologies enables network operators to offer a rich set of services, but the complexity of a multilayered network presents the operator with a set of challenges in capacity planning the network to accommodate growth in demand.

The planning process is made up of two stages. The first stage is the design stage. The design stage represents the designing and modeling of each network layer in software. The design stage involves building networks and pre-setting capacity in those networks. The second stage is the simulation stage. This is where the planner routes traffic and assigns traffic to links on the network. This can be done manually or in software.

The network planning function is performed separately for each layer of an operator's network. The results of the network planning function at an upper network layer are passed down as inputs for the network planning function of the lower layer. Traditionally, network operators have separate individuals or a team to plan each layer.

The problems with the known approach are that the planning of the lower network layer cannot start until the planning of the higher network layers has being completed, the network planning functions of the higher layers cannot see technical constraints e.g. bandwidth bottlenecks at the lower layers, the process is slow because it's done manually; the process is inefficient and prone to errors because it involves manual movement of data between individuals or teams. One solution would be to build a complete network model and using it in the design and simulation stages. However, the task of building a full network model to replace the existing network layer models would be difficult, and the resulting model would have limited reusability.

In accordance with one aspect of the present invention there is provided a method of conducting network planning using a computer-software implemented planning tool, said method comprising:
modeling a first network layer in software as a first network layer model;
modeling a second network layer in software as a second network layer model; and
simulating a network capacity requirement by exchanging data between said first and second network layer models.

The method enables the establishment of relationships between the network layers within a multi-layer network during the design stage, without requiring a complete multi-layer network model to be built. Rather than replacing the use of separate network layer models, separate network layer models may be used, thereby reducing complexity and improving reusability, and simulating a capacity requirement by the exchange of information between the models allows the network planning process to be improved.

Further, the method enables the increased automation of the planning cycle by reducing or removing the need for manual movement of data between teams during the design and/or simulation stages.

Furthermore, the method enables an increase in the accuracy of the data output from the network planning function during simulation.

Preferably, the method uses the exchange of messages between the network layer models during the design and/or simulation stages of a network planning process.

Preferably, the method provides the designation of pairs of nodes in the different layer models at which an exchange of information between layers is to occur. These represent pairs of nodes at which data may be transferred between layers in the network being modeled. This reduces the amount of information required to be exchanged during the simulation stage, and the complexity of the modeling task.

Preferably, the method provides the introduction of additional network layer models with which information is to be exchanged during the design stage. This simplifies the process of introducing additional network layers into the network, by allowing planners to see the impact on the existing layers during the design stage.

Preferably, the method provides for the planning of all the network layers simultaneously during the simulation stage.

Preferably, the method provides for the exchange of network-planning information between layers during the simulation stage. This information includes constraints e.g. technical and financial.

Preferably, the method represents a link established in the higher network layer model as a traffic requirement in a lower network layer model during the simulation stage.

Preferably, the method provides for the exchange network constraint information in the different network layer models using messages transmitted between nodes of the network layer models during the simulation stage.

Preferably, the method maintains state information within each of the different network layer models. The status information changes during the simulation stage when messages are received from other network layer models.

Preferably, each network layer model includes a separate routing table, which can be updated during the simulation stage.

Preferably, the method provides for the recalculation of routes within a network layer model when the status of a link or equipment at a node in a different layer model changes from available to unavailable during the simulation stage. During this process, traffic that has not been routed waits for the recalculated routing table before getting a new route.

Preferably, the method provides an upper network layer model with the capability to solicit constraint information from a lower network layer model using message exchange between the network representations during the design and simulation stage.

Preferably, the method enables the lower layer to solicit information from all the upper layers using these messages between the network representations during the design and simulation stage.

Preferably, the method enables a network layer model to solicit information from non-adjacent layers using these messages between the network representations during the design and simulation stage.

According to a further aspect of the invention, there is provided a method of conducting network planning a telecommunications network using a computer-software implemented planning tool, said method comprising:
designing a first network layer of said telecommunications network in software as a first network layer model which includes a plurality of nodes;
designing a second network layer of said telecommunications network in software as a second network layer model which includes a plurality of nodes, the first network layer being lower said second network layer; and
simulating a network capacity requirement by executing a simulation process involving said first and second network layer models,
wherein, during the design process, said planning tool provides functionality enabling a node from said second network layer to form an association with a node from said first network layer, the association once formed enabling a traffic flow to pass from said upper layer node to said lower layer node during said simulation.

Preferably, the method provides nodes in a lower layer model with the capability to advertise themselves to a node in an upper layer model using a message exchange during the design stage. The message is sent from the node in the lower layer model to a node in the same geographic location (or other locations depending on the configuration) in the higher layer model. The planner working at the design stage of the higher network layer, will see the lower layer advertised node as an access point into the lower network layer when the planner needs to decide where to "join" the network at this layer. The planner can then select a lower network layer node from one or more access points which may be available.

The invention further provides software and apparatus arranged to carry out the method according to the above-mentioned aspects of the invention.

The method and software of the invention simplifies the planning process of introducing additional network layer models into the set of network layer models by allowing planners to see the impact on the existing layers during the design stage.

Further features and advantages of the invention will become apparent from the following description of preferred embodiments of the invention, given by way of example only, which is made with reference to the accompanying drawings.

### Brief Description of the Drawings

Figure 1 is a schematic illustration showing a computer on which the network planning software according to an embodiment of the invention is stored and executed.
Figures 2 to 5 are schematic illustrations of network layer models arranged in accordance with an embodiment of the invention.
Figures 6 and 7 are sequence diagrams showing steps carried out in accordance with network planning methods in accordance with the present invention.
Figures 8 and 9 are flow diagrams showing steps carried out in upper and lower layer network layer models, respectively, when simulating a network capacity requirement in the network.

### Detailed Description of Preferred Embodiments

Embodiments of the invention provide a computer-implemented network modeling process and computer software for carrying out the process.

An embodiment of the invention will now be described. The software of the present invention is adapted to run on a computer, such as a personal computer workstation, although other embodiments are envisaged, such as network and server-based software.

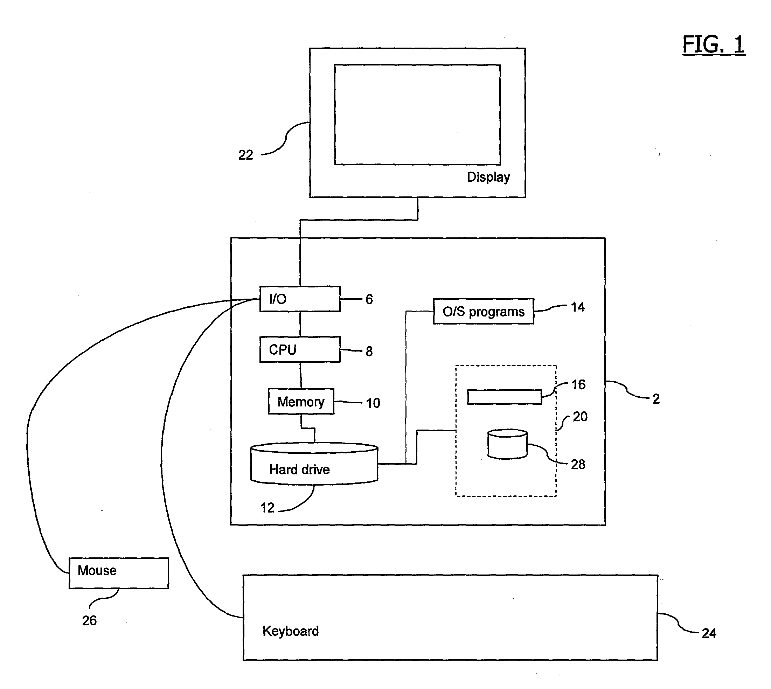

Figure 1 illustrates a computer having software in accordance with the invention stored thereon. The computer 2, in this embodiment a personal computer workstation, includes a central processing unit (CPU) 8, memory 10, a data storage device such as a hard disc drive 12 and I/O devices 6 which facilitate interconnection of the computer with a display 22, a keyboard 24 and a pointing device 26, respectively. Operating system programs 14 are stored on the hard disc drive 12, and control, in a known manner, low level operation of the computer terminal 2. Program files and data 20 are also stored on the hard disc drive 12, and control, in a known manner, outputs to an operator via associated devices and output data stored on the hard disc drive. Included in the program files 20 stored on the hard drive 12 are planning tool software 16 and a database 18 for storing network planning data files input into the system and network capacity availability output files resulting from the processing thereof.

The software 16 in one embodiment of the invention contains software objects which are instances of classes written in an object-oriented computer language, such as C++. These classes include classes for routing algorithm objects, routing table objects, route objects, location objects, node objects, link objects, network layer control objects, and traffic flow objects. The objects are used to produce two or more network layer models, representing network layers in a telecommunications network. The software is designed to allow the exchange of data between the network layer models, both during a design stage and a simulation stage. Each network layer model is composed of one or more collection of nodes and links. This represents the network at each layer. Each network layer model includes a routing algorithm. The routing algorithm uses the network layer model to create routes within the layer.

There is one routing table for each network layer model. The routing table object holds route objects which identify available routes between nodes in the network layer. A route is made up of a collection of nodes or links. This represents the path or route from one node to another node in the network layer.

The location objects each represent a different location in which nodes of the network at each layer may be positioned. The location objects can represent a building location, city, country etc.

The models include a number of traffic flow objects during the simulation stage. Each traffic flow object represents traffic starting at one node and terminating at another node. Each traffic flow object is associated with 0 or more routes.

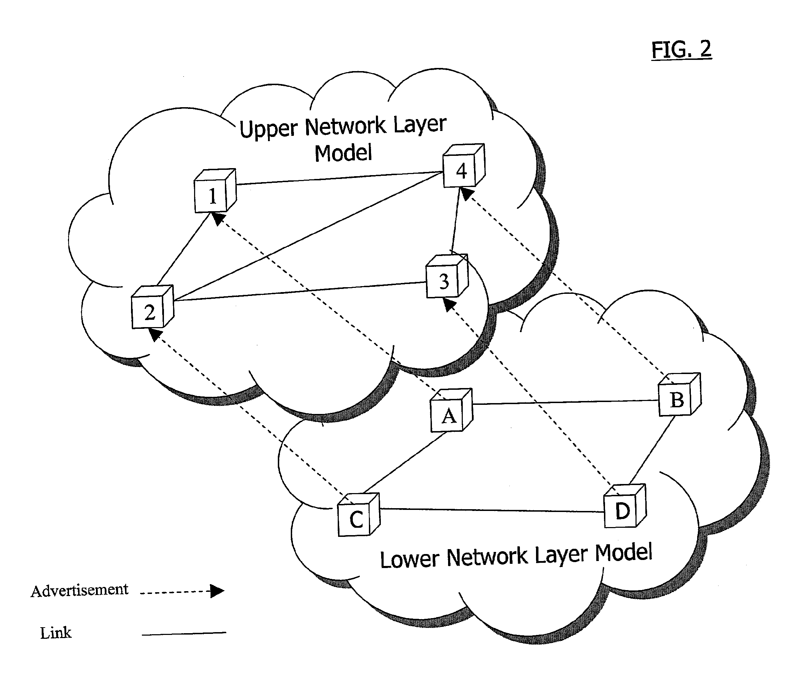

The user can interact with the software of the invention either using a graphical user interface (GUI) or at the command line of the computer application. The user can design the network by either creating input files e.g. text files or using the GUI. The user would be able to move and copy instances of the links and nodes using the GUI. The user would create a graph of the nodes and links at each layer on the screen of the computer application during the design stages. The user needs to create the lower layer first. The user can then create the upper layer where the user can select how to connect into the lower layer. The software of the invention would display lower layer nodes for the user to select during the design stages. These lower layer nodes are made known to the higher layer nodes using the advertising process described in relation to Figure 2 below. Lower layer nodes send an advertisement to the location object they are located at. The upper layer node can see lower layer nodes in the same location. These would be displayed using the GUI e.g. a drop down list of the lower layer nodes. After completing the initial design, the user would run the software of the invention in simulation mode i.e. traffic flows routing and traffic flows consuming capacity on nodes and links. During the simulation stage, the software of the invention would pass messages between the network layer models. The messages may be passed between the link object in the upper layer and the traffic flow object in the lower layer or they may be passed between two controller objects in each layer. The link object and the top layer correspond to traffic at the lower layer. The link in upper layers has a link object at the upper layer and a traffic flow object at the lower layer associated with each other. This would result in traffic being dropped or rerouted during the simulation stage.

Two or more layers of a telecommunications network are modeled using computer software. Each layer is modeled in software as a separate network layer model. However, nodes of the different network layer models are specially adapted, in that the nodes are arranged to be capable of exchange of information, in well-defined interactions, with nodes of different network layer models. Information input from a different network layer model in to one network layer model can be used to initiate or query the remainder of the said one network layer model, and information can be output in response, to the said different network layer model and/or other network layer models.

Figure 2 is a schematic illustration of a basic set of interactive network models, arranged in accordance with an embodiment of the invention. Figure 2 shows two network layer models representing a simple two-layer network. The number of nodes in network layer models shown is small. Normally, the number of nodes can range from a few to several thousand and the number of layers can range from two to several layers.

Figure 2 show arrows from nodes A, B, C and D to nodes 1, 2, 3 and 4 respectively. These arrows represent advertisement messages that are sent from the lower network layer model to the higher network layer model. These nodes represent access points into the lower layers. These advertisements are generated during the design stage. The user will then choose an access point into the lower layer, the access point being selected from the nodes advertising in the lower layer in the same, or a related, location (as represented by a respective location object), for each node in the upper layer. In this case there is only a single access point but there may be more than one access point into the lower layer.

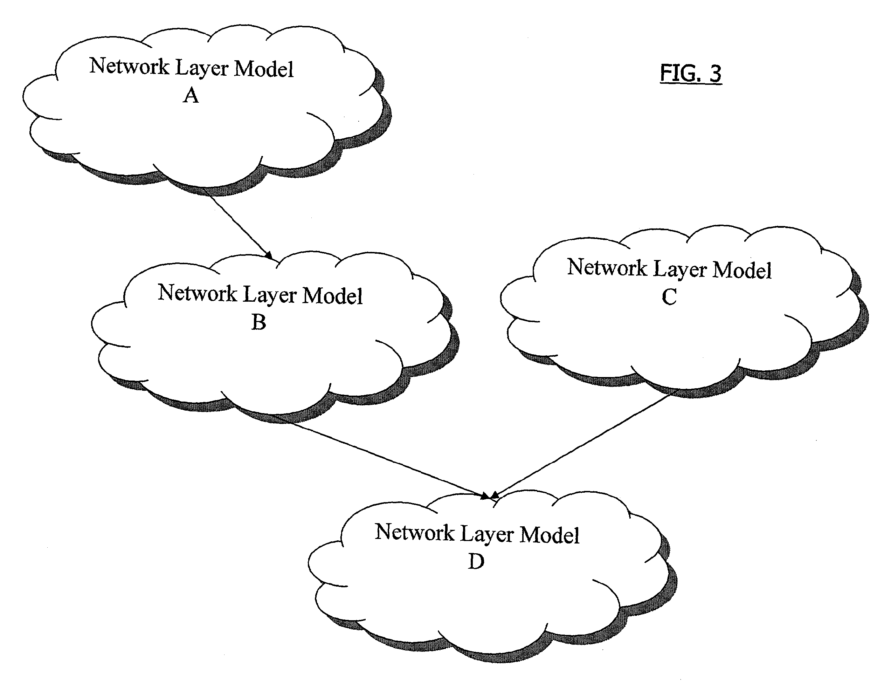

Figure 3 shows an exemplary set of relationships between a plurality of different network layer models (A, B, C, D) and the exchange of messages which can occur during the establishment of the relationships. These messages occur at the design stage and are sent between nodes in the network layer models which are relatively proximate, in terms of location. They are dependent on the messages defined in Figure 2. If network layer model A uses access points in network layer model B then a message is established between the network layer model A and network layer model B. Regardless of whether or not network layer model A uses one or more than one access point in network layer model B there would only be a single message establishing the relationship between network layer model A and network layer model B.

The messages in Figure 3 are used for exchanging constraint information during the simulation stage.

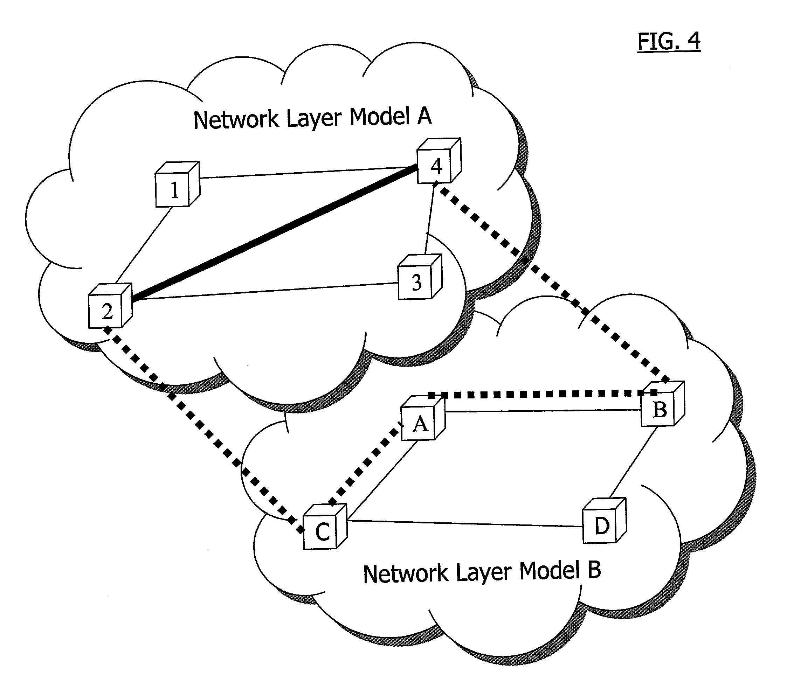

Figure 4 shows how the method of the invention treats a link in network layer model A, shown as a dark line from node 2 to node 4, is treated as traffic, shown as a corresponding dotted dark line, routed via nodes C, A and B in network layer model B.

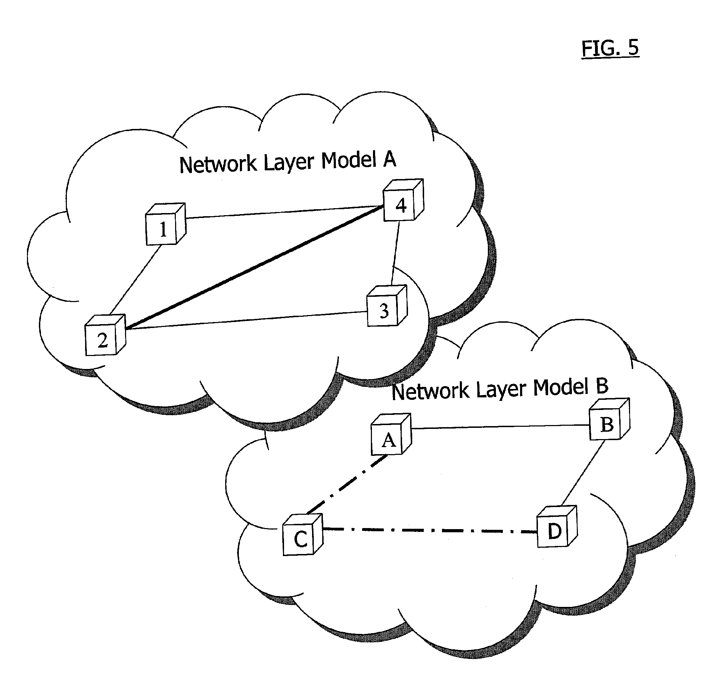

Figure 5 shows a situation, which may be simulated during the simulation stage, in which the link in network layer model B from nodes C to A and nodes C to D have become unavailable. These unavailable links are highlighted as dotted lines. The reason for the lack of availability may be due to technical constraints e.g. capacity constraints or "soft" constraints e.g. financial reasons, etc. These result in the need for the network layer modeled in network layer model B to be augmented in order for an additional link, shown as a dark line in Figure 5, in network layer model A to be created.

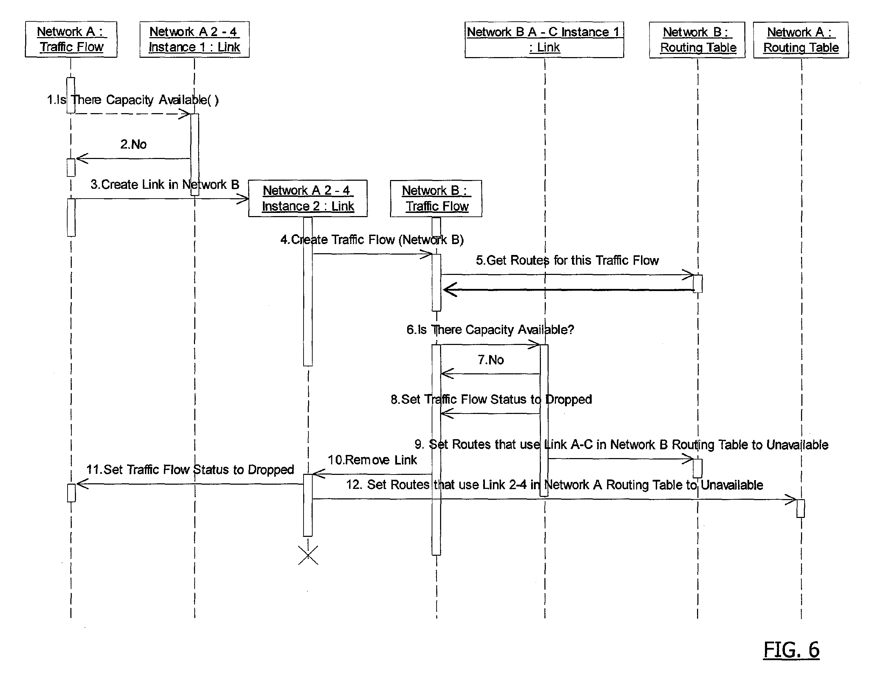

Figure 6 shows a sequence of messages that the software according to an embodiment of the invention will use when creating augments in the network. These steps are described below.
1. A traffic flow in network layer model A requires capacity over link 2 to 4. The traffic flow object representing this flow queries the link object representing the link connecting nodes 2 to 4 if there is capacity available.
2. The link object checks if there is capacity available. Since there is no capacity available currently, according to its current capacity usage, the link object tells the traffic flow object that there is no capacity available to support this traffic flow.
3. The traffic flow object creates a further link object representing a new link between nodes 2 and 4.
4. The new link object creates a traffic flow object representing traffic flow in network layer model B that supports the link in network layer model B.
5. The new traffic flow object queries network B routing table for the links that this traffic flow will use in network layer model B.
6. The traffic flow object checks the appropriate link objects to determine whether these links have capacity available.
7. Each link object checks if there is capacity available. The link object tells the traffic flow object that there is no capacity available to support this traffic flow.
8. The traffic flow object sets the status to dropped.
9. The link object sends a message to the network layer model B routing table object and asks it to remove the route objects that include this link
10. The link object also sends a message to the traffic flow object to set the status of this traffic flow to dropped.
11. The traffic flow object sends a message to the link object in network layer model A that this link is not supported due to a constraint in network layer model A.
12. The link object also sends a message to the traffic flow object to set the status of this traffic flow to dropped
13. The link object in network layer model A deletes itself.

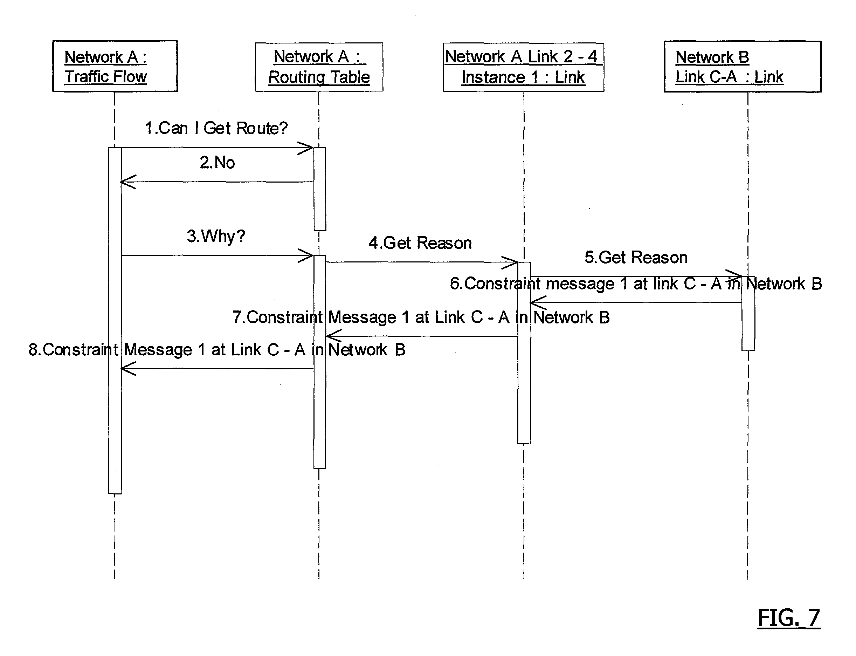

Figure 7 illustrates how a traffic flow object, which is unable to find a route, can ask the routing table for the reason. The routing table object responds with a message giving the reason i.e. constraint on lower layer link due to capacity or financial constraints.
1. A traffic flow in network layer model A requires a route from nodes 2 to 4. The traffic flow object queries the network layer model A routing table to determine if there is a route available.
2. The routing table object checks if there is a route available. Since there is no route available currently, the routing table object tells the traffic flow object that there is no route available.
3. The traffic flow object requests the reason.
4. The routing table object contacts a link object representing the link in network layer model A.
5. The link object contacted in network layer model A queries a corresponding link object in network layer model B.
6-8. Each object in turn returns the reason, in the form of a constraint message, to the traffic flow object in network layer model A.

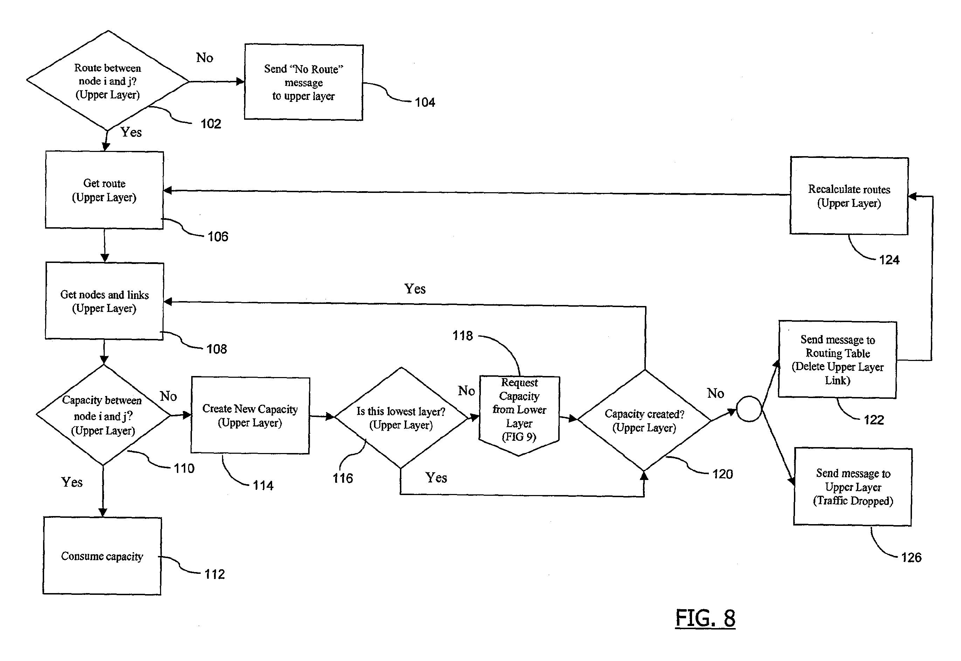

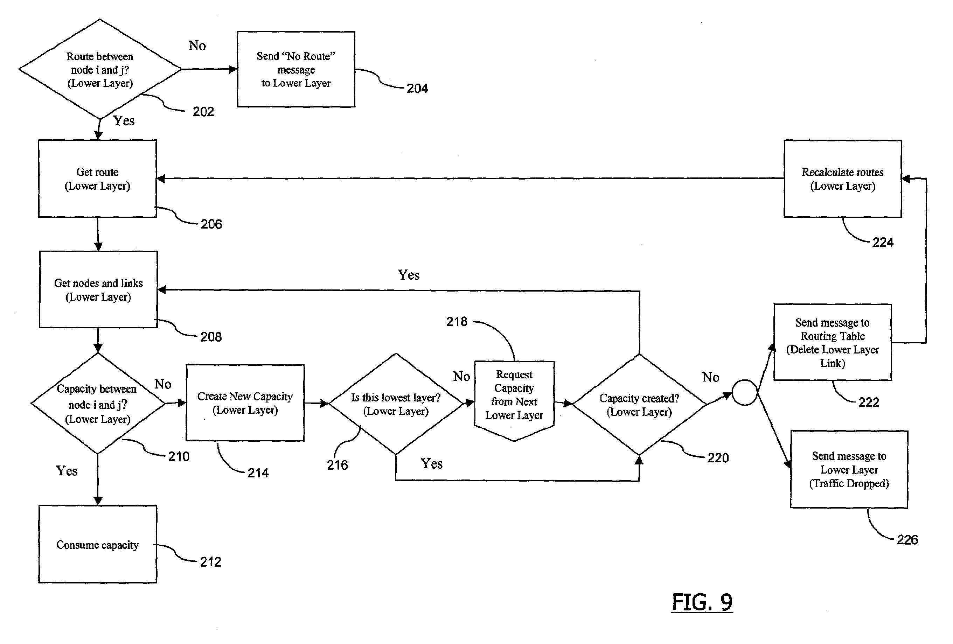

Figures 8 and 9 show the process of creating a link in the upper layer during the simulation stage. Figure 8 shows the process of creating a link in the upper layer. The user starts the simulation. The simulation is carried out without user interaction until completion. Completion occurs when attempts to route all traffic flows have been carried out.

First, the traffic flow object is created, which then proceeds in step 102 to request a route from the routing table object in the upper layer. The routing object checks if a route is available for a traffic flow in the upper layer between nodes i and j.

If no route is available the traffic flow object sends a message, step 104, to the upper network layer object to say that the there is no route between node i and j. The process ends.

If a route is available, the traffic flow object obtains the route from nodes i and j in the upper layer, step 106. A traffic flow object in the upper layer requests these routes from the routing table object in the upper layer.

The network models contain multiple instances of traffic flow object. One instance of the traffic flow object in the upper layer gets the route object from the routing table object in the upper layer. The route object gets the nodes and links that make up the end-to-end path for between nodes i and j in the upper layer, step 108.

The traffic flow object checks if there is capacity between nodes i and j in the upper layer, step 110. This involves checking if there is capacity in each node and link instance that make up the route object. If there is capacity then capacity usage data is updated with the traffic flow characteristics for each of the node and link objects which the traffic flow traverses, step 112. The process ends.

If there is no capacity then the traffic flow object needs to create new capacity, step 114. The traffic flow object checks to see if this is the lowest layer, step 116. If it is the lowest layer then it attempts to create the capacity without having to check for capacity in the lower layers, step 120.

If this is not the lowest layer then the capacity is requested from the next lower layer, step 118. Figure 9 represents the process of routing and consuming links at the next lower layer, and the procedure is similar to that described in relation to the upper layer in Figure 8. For the sake of brevity, the description of processing used in relation to Figure 8 should be taken to apply here, and corresponding steps are labelled with the same reference numerals, incremented by 100. Step 118 involves the traffic flow object in the upper layer attempting to create an additional link object in the upper layer as described in relation to Figure 6 above. The new link in the upper layer creates a traffic flow in the lower layer. The traffic flow object in the lower layer goes through the same process of attempting to find a route and capacity in the lower layer. If capacity is available in the lower layer for this lower layer traffic flow object then the link in the upper layer is created. If the capacity is not available then the link in the upper layer is not created. This result of this process is either a successful or unsuccessful creation of additional capacity in the upper layer.

If the process in step 118 is successful the processing goes back to step 108.

If the process in step 118 is unsuccessful then the traffic flow object sends a message to the routing table in the upper layer to delete the upper layer links that was unavailable, step 122. This results in the routing algorithm recalculating the routing tables object, step 124. This also results in a message to the upper layer model indicating that the traffic flow was dropped, step 126. The message contains the reason for the failure. The process terminates.

Further features of the invention are described below.

### i) Modeling of constraints

The nodes and the links in the network layer models of the invention allow the user to set constraints against the links and nodes e.g. the maximum number of links between two nodes. This constraint could be in the form of technical e.g. the maximum number of ports on a node limits the number of links between two nodes or financial e.g. the budget limitations only allows for a finite number of links between the two nodes. The invention feature of message exchange between the network layers enables the higher network layers to see these constraints during the simulation stage. This could occur when a higher layer traffic flow attempts to consume capacity on a lower layer network link. The lower layer network link will inform the higher layer that the lower layer node is unable to find a route for the higher layer traffic flow. The message would contain the constraint reason.

### ii) Prioritisation of traffic

The properties of the nodes and link objects in any layer allows the user to limit the capacity available on any network link or node, irrespective or network layer, for each traffic type or priority type during the design stage. This constraint information can be exchanged between the layers during the design stage. The lower layer network will inform the higher layer network that there is no capacity available for low priority traffic e.g. the lower priority traffic has got the maximum allowable capacity on a lower layer link. This exchange of information is enabled using the message exchange aspect of the invention during the simulation stage.

### iii) Automation of the network planning processes

The invention feature of exchange of messages between different layers during the simulation stages allows more than one network layer to be planned simultaneously. This enables the automation of the multiple network planning processes.

### iv) Storage of temporal network-planning data

The software of the invention e.g. node objects, link objects in any layer allows the user to define states of the links and nodes over time e.g. from some time to some other time the link between two nodes becomes active. The simulation stage will move through simulation time. The links or nodes are only considered for routing of traffic during the time period the link or node is active. The activation or deactivation of nodes or links during the simulation stage will be updated using messages between the higher and lower network layers and also between the node instances or links and the routing tables for the network layer.

### v) Representation of multiple planning states

The software of the invention allows the user to define multiple planning stages for the links, nodes or collections of the links and nodes during the design stages. The exchange of messages between the layers allows the lower layers to inform the upper layers that the traffic flow cannot be routed at this point in time during the simulation stage but that this traffic flow will be routed at some time later in the simulation stage because capacity e.g. additional links or nodes will become active later in simulation time.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of conducting network planning using a computer-software implemented planning tool, said method comprising:
modeling a first network layer in software as a first network layer model;
modeling a second network layer in software as a second network layer model; and
simulating a network capacity requirement by exchanging data between said first and second network layer models.

2. A method according to claim 1, comprising modeling said first network layer in terms of a plurality of nodes connected by links.

3. A method according to claim 1 or 2, comprising modeling said second network layer in terms of a plurality of nodes connected by links.

4. A method according to any preceding claim, comprising the exchange of constraint data between said first and second network layer models.

5. A method according to any preceding claim, comprising the transmission of information about an access point in said first layer to said second network layer model.

6. A method according to any preceding claim, comprising providing a user interface allowing a user to view information relating to components in a lower network layer that can support a higher network layer during modeling of the higher network layer.

7. A method according to any preceding claim, comprising providing a user interface allowing a user to view information relating to constraints occurring in a network layer during simulation of a network capacity requirement.

8. A method according to any preceding claim, further comprising:
modeling a third network layer, which is non-adjacent to said first layer; and
simulating an interaction between said first and third network layers.

9. A method according to any preceding claim, comprising simulating an exchange of both technical and non-technical constraint information.

10. A method according to any preceding claim, comprising simulating a link in a higher layer as traffic in a lower layer.

11. A method of conducting network planning for a telecommunications network using a computer-software implemented planning tool, said method comprising:
designing a first network layer of said telecommunications network in software as a first network layer model which includes a plurality of nodes;
designing a second network layer of said telecommunications network in software as a second network layer model which includes a plurality of nodes, the first network layer being lower said second network layer; and
simulating a network capacity requirement by executing a simulation process involving said first and second network layer models,
wherein, during the design process, said planning tool provides functionality enabling a node from said second network layer to form an association with a node from said first network layer, the association once formed enabling a traffic flow to pass from said upper layer node to said lower layer node during said simulation.

12. A method according to claim 11, wherein said functionality comprises enabling a node from said first network layer to advertise its availability to form an association with a node from said second network layer.

13. A method according to claim 11 or 12, wherein said functionality comprises enabling a user to select from one or more nodes from said first network layer in order to form an association with a node in said second network layer.

14. Computer software adapted to carry out the method of any preceding claim.

15. Apparatus adapted to carry out the method of any of claims 1 to 13.
